Europäisches Patentamt

European Patent Office

Office européen des brevets

(11) Publication number: **0 421 583 A1**

## EUROPEAN PATENT APPLICATION

(21) Application number: 90308557.9

(22) Date of filing: 03.08.90

(51) Int. Cl.5: **H04Q 3/00**, H04M 3/50, H04M 7/00

(30) Priority: 06.10.89 GB 8922529

(43) Date of publication of application:
10.04.91 Bulletin 91/15

(84) Designated Contracting States:
BE DE DK ES FR GR IT LU NL SE

(71) Applicant: GEC PLESSEY
TELECOMMUNICATIONS LIMITED
New Century Park P.O. Box 53
Coventry, CV3 1HJ(GB)

(72) Inventor: Sharp, Christopher David
11 Sanford Road
Broadstone, Dorset(GB)
Inventor: Torr, Richard John
12 Broughton Ave.
Bournemouth, BH10 6H2(GB)
Inventor: Lane, Keith Martin
50 Marshwood Ave.
Canford Heath, Poole, Dorset(GB)
Inventor: Martin, Stephen Ian
10 Nuthatch Close
Creekmoor, Poole, Dorset(GB)
Inventor: Wingfield, Godfrey
41 Somerby Road
Oakdale, Poole, Dorset(GB)

(74) Representative: MacKenzie, Ian Alastair
Robert
The General Electric Company, p.l.c. Central
Patent Department Wembley Office Hirst
Research Center East Lane
Wembley Middlesex HA9 7PP(GB)

(54) Call distribution system.

(57) The invention concerns an automatic call distribution system comprising a plurality of telephone exchanges or nodes (1...5) each capable of accepting traffic and re-routing the traffic to any one of the nodes. Each node (1...5) includes means for calculating an activity level dependent on the amount of traffic being handled by that node, of forwarding that activity level to the other nodes in the network and of calculating a threshold level, the arrangement being such that no node will re-route a call to a node having an activity level above the threshold level. Furthermore each node is operative periodically to send a message to each of the other nodes giving a unique identification of the sending node and its activity level, and in response to activity levels sent by the other nodes to calculate a mean activity level.

*Fig.1.*

EP 0 421 583 A1

## CALL DISTRIBUTION SYSTEM

The present invention concerns telephone networks in which a plurality of telephone exchanges are grouped together for the purpose of automatic call distribution of certain types of operator dependent services.

Automatic call distribution has a number of advantages over non-automatic systems. In particular they can reduce the amount of time a caller has to wait before they are answered by an operator. Additionally they increase the number of calls which can be handled per unit time and thus increase profitability.

The present invention has for an object to provide an automatic call distribution system which tends to distribute the calls evenly between the linked exchanges so as to give a balanced operator load throughout the network.

Accordingly the present invention consists in an automatic call distribution system comprising a plurality of telephone exchanges each capable of accepting traffic and re-routing the traffic to any one of the other nodes, each exchange including means for calculating an activity level dependent on the amount of traffic being handled, of forwarding that activity level to the other exchanges in the network and of calculating a threshold level such that no exchange will re-route a call to an exchange having an activity level above the threshold level.

Preferably the threshold level is set at the mathematical mean of the activity levels plus an integer.

In order that the present invention may be more readily understood, an embodiment thereof will now be described by way of example and with reference to the accompanying drawings in which:

Figure 1 is a bar chart showing activity levels in five linked telephone exchanges, and

Figure 2 is a diagram showing five linked telephone exchanges.

One proposed embodiment of an automatic call distribution system according to the present invention utilises CCITT No.7 signalling over the UK's existing PCM (Pulse Code Modulation) inter-exchange links.

In accordance with the present invention a plurality of exchanges are linked to form a network. Each exchange can transfer an incoming call to any other exchange for handling at that node.

To ensure fair distribution of the workload each of the participating exchanges, or nodes, periodically sends a message, using existing call protocol, to another node. The message contains the unique identification of the sending node and an integer number indicating how busy the sending node is. For the purpose of the present description the integer number lies within the range 0 to 19. The receiving node acknowledges the message and responds with a similar message indicating its identity and level of activity. The sending and receiving of these messages is known as the status message exchange.

This exchange of status messages is carried out between all of the nodes in the network and at the conclusion of the status message exchanges each node calculates the mathematical mean of the activity levels.

The result of this calculation is an interger as any decimal part is rounded down. To this integer each node adds 1.

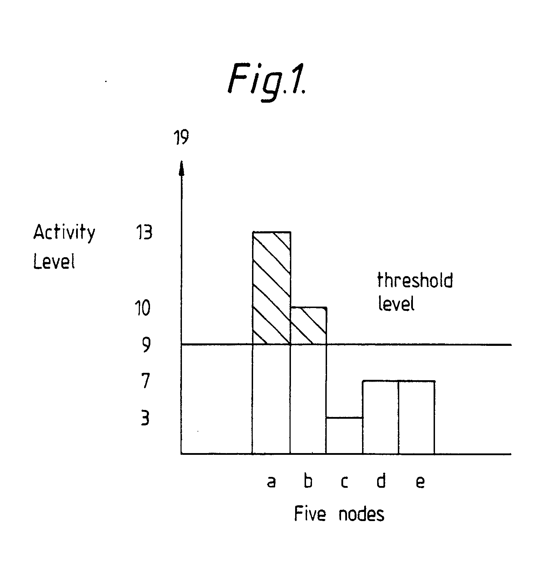

Referring now to Figure 1 the Y axis represents activity level on the scale of 0 to 19 and the X axis shows five nodes a to e. It can be seen that the activity level for node a is 13, for node b 10, for node c 3, and for nodes d and e 7. This gives a mean value of the activity levels of 8. To this mean value each node adds 1 to define a threshold level of 9. The threshold level represents the activity level that a node must exceed for it to be allowed to send a call to another node. The addition of 1 to the mean ensures that if all the nodes were at the same level there would be no onward routing of calls as all the nodes would have activity levels less than the threshold level.

It will now be apparent that in a system having the activity levels shown in Figure 1 nodes a and b are the only nodes above the threshold level.

Thus nodes a and b will onward route calls to nodes c, d or e thus distributing the workload more fairly.

To ensure against instability which can be caused by one or more recipient nodes increasing their activity above the threshold level in the period leading up to the next status message exchange each recipient node responds to the sending node with its new activity level. One sending node can then calculate its re-routing threshold taking account of the increased activity level.

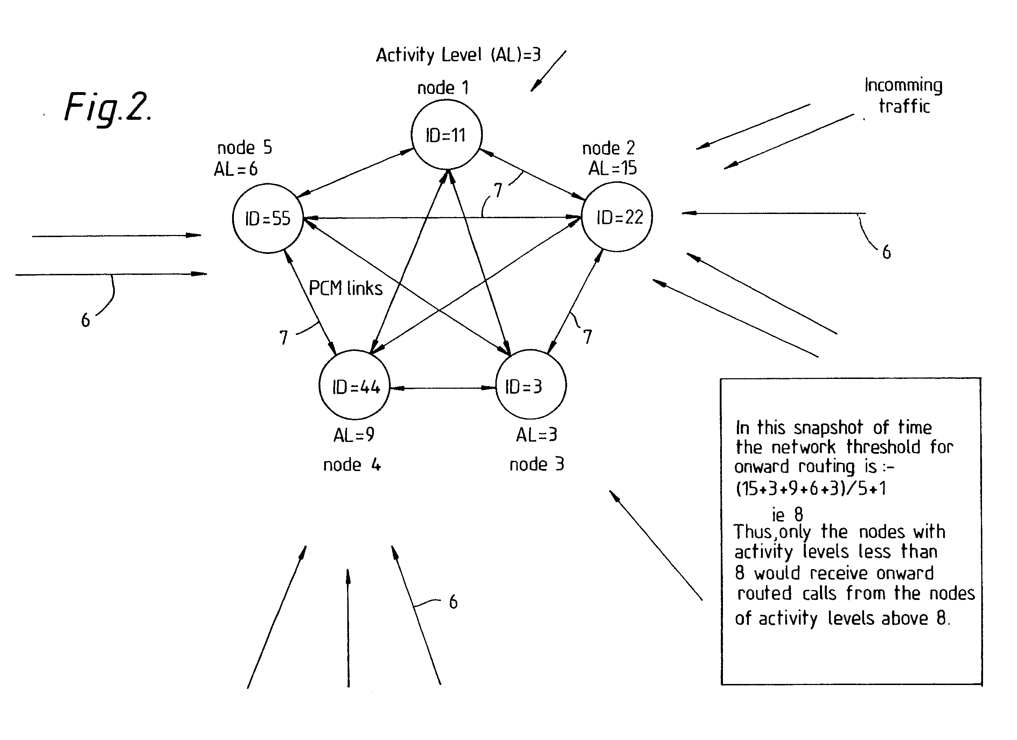

Figure 2 is a diagram showing interconnected exchanges. The nodes are numbered 1 to 5 and have incoming traffic indicated at 6. The nodes are all interconnected by PCM links 7 and the activity level of each node is shown alongside it. Thus node 1 has an activity level of 3 and the network threshold is 8.

## Claims

1. An automatic call distribution system comprising a plurality of telephone exchanges or nodes (1...5) each capable of accepting traffic and re-routing the traffic to any one of the other nodes, and characterised in that each node includes means for calculating an activity level dependent on the amount of traffic being handled by that node, of forwarding that activity level to the other nodes in the network and of calculating a threshold level, the arrangement being such that no node will re-route a call to a node having an activity level above the threshold level.

2. A system as claimed in Claim 1, and further characterised in that each node is operative periodically to send a message to each of the other nodes giving a unique identification of the sending node and its activity level, and in response to activity levels sent by the other nodes to calculate a mean activity level.

3. A system as claimed in Claim 2 and further characterised in that each activity level is calculated as an integer number, and the nodes each calculate the mathematical mean of the activity levels to the nearest integer.

4. A system as claimed in Claim 3, and further characterised in that each node adds an integer to the calculated mean to generate the threshold value.

# Fig.1.

# Fig.2.

Activity Level (AL)=3

node 1

node 5
AL = 6

node 2
AL =15

Incomming
traffic

ID=11

ID=55

ID=22

7

6

PCM links

7

7

6

ID=44

ID=3

AL=9

AL=3

node 4

node 3

6

In this snapshot of time the network threshold for onward routing is :-

(15+3+9+6+3)/5+1

ie 8

Thus, only the nodes with activity levels less than 8 would receive onward routed calls from the nodes of activity levels above 8.

EP 0 421 583 A1

**European Patent Office**

# EUROPEAN SEARCH REPORT

Application Number

## EP 90 30 8557

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | TENTH INTERNATIONAL TELETRAFFIC CONGRESS, PROC. 2 June 1983, MONTREAL(CA) pages 1 - 8; P.J.T.DE SOUSA: "TRAFFIC ENGINEERING FOR AUTOMATIC CALL DISTRIBUTION NETWORKS",SESSION 4.3A; PAPER<br>– – – | 1,2 | H 04<br>Q 3/00<br>H 04 M 3/50<br>H 04 M 7/00 |
| Y | EP-A-0 276 754 (TELIC ALCATEL)<br>* column 1, line 28 - column 2, line 10 *<br>– – – | 1,2 | |
| A | BELL LABORATORIES RECORD. vol. 53, no. 4, April 1975, MURRAY HILL, NEW JER pages 197 - 202; ROBERT W.KAHN: "REDESIGNED ACD IMPROVES DIRECTORY-ASSISTANCE SERVICE"<br>* page 202, right-hand column, lines 32 - 46 * *fig. on page 201 *<br>– – – | 1 | |
| A | US-A-4 737 983 (FRAUENTHAL)<br>* column 2, lines 5 - 49 *<br>– – – – – | 1 | |

TECHNICAL FIELDS
SEARCHED (Int. Cl.5)

H 04 M
H 04
Q

The present search report has been drawn up for all claims

| Place of search | Date of completion of search | Examiner |
|---|---|---|
| The Hague | 21 December 90 | VANDEVENNE M.J. |